# EUROPEAN PATENT APPLICATION

(11) **EP 2 804 428 A1**
(43) Date of publication of application: **19.11.2014**
(21) Application number: 12865037.1
(22) Date of filing: 12.11.2012
(51) Int. Cl.: H04W 52/02

(54) **RADIO BASE STATION APPARATUS AND TRANSITION CONTROL METHOD**

(30) Priority: 11.01.2012 JP 2012002837
(71) Applicant: NTT DOCOMO, INC., Chiyoda-ku Tokyo 100-6150 (JP)
(72) Inventor: TAKIGUCHI, Takahiro, Tokyo 100-6150 (JP); KIYOSHIMA, Kohei, Tokyo 100-6150 (JP); OOKUBO, Naoto, Tokyo 100-6150 (JP); AOYAGI, Kenichiro, Tokyo 100-6150 (JP); UMESH, Anil, Tokyo 100-6150 (JP); UCHINO, Tooru, Tokyo 100-6150 (JP)
(74) Representative: Hoffmann Eitle
(86) International application number: PCT/JP2012/079312
(87) International publication number: WO 2013/105334

(57) **Abstract**

A radio base station apparatus includes an information retrieval unit configured to retrieve information of the radio base station apparatus or information of a device that is connected to the radio base station apparatus, a timer value determination unit configured to determine, based on the retrieved information, a timer value representing a time period from termination of data communication with a mobile station until causing the mobile station to transition to an idle state; and an idle transition controller configured to cause the mobile station to transition to the idle state, based on the determined timer value.

## Description

### TECHNICAL FIELD

The present invention relates to a radio base station and a transition control method.

### BACKGROUND ART

In a mobile communication system, after completing data communication, a mobile station may switch to a power saving mode so as to reduce battery power consumption. For example, a Long Term Evolution (LTE) system introduces transition to a discontinuous reception (DRX: discontinuous reception) state. In the DRX state, a mobile station performs reception only during predetermined time intervals when the mobile station does not perform communication for a predetermined time period after completing data communication. Specifically, a state of a mobile station automatically transitions to the DRX state, when a non-communication time period exceeds a DRX transition timer period, which has been reported to the mobile station in advance. Here, the non-communication time period is a time period during which no communication is performed after termination of data communication. The DRX transition timer value represents a non-communication time period of a mobile station after termination of data communication until transition to the DRX state. In the DRX state, power consumption of a mobile station is reduced by periodically performing reception only during predetermined time intervals and not performing reception in time intervals other than the predetermined time intervals.

Further, when no communication is performed for an additional predetermined time period, a state of a mobile station transitions to an idle state. In the idle state, a level of power consumption is lower than that of the DRX state. Here, a non-communication time period of the mobile station from termination of the data communication until transition to the idle state is referred to as an "idle transition timer value." In an LTE system, a radio base station apparatus (eNB) controls such an operating state of a mobile station. When a mobile station is to switch its operating state, the mobile station may receive a command from a radio base station (cf. 3GPP TS36.304 v9.8.0).

### RELATED ART DOCUMENT

### [NON-PATENT DOCUMENT]

Non-Patent Document 1: 3GPP TS36.304 v9.8.0

### SUMMARY OF THE INVENTION

### PROBLEM TO BE SOLVED BY THE INVENTION

When a state of a mobile station is an idle state, the mobile station operates with the lowest power consumption. Accordingly, battery power consumption of the mobile station can be reduced by shortening the idle transition time value, so that the state of the mobile station transitions quickly from the DRX state to the idle state. During the DRX state, when a mobile station receives a communication request, the mobile station can quickly perform communication because the DRX state is a communication (RRC Connected) state. Whereas, since the idle state is not the RRC Connected state, a reconnection process may be required, such as communication timing synchronization or terminal authentication. Accordingly, transition from the idle state to the RRC Connected state may place a load on an eNB or on a core network apparatus (EPC: Evolved Packet Core). Accordingly, during a state in which a large load is placed on an eNB or an EPC, it may not be preferable that a state of a mobile station relatively quickly transitions to the idle state. Therefore, it may be preferable to adjust the idle transition timer value to be short to the extent that it may not affect the process of the eNB or the EPC.

An object of the present invention is to provide a radio base station apparatus and a transition control method with which idle transition timer values can be individually set for mobile stations, while considering states of the mobile stations, an eNB, and an EPC, for example.

### MEANS FOR SOLVING THE PROBLEM

A radio base station apparatus according to the present invention includes an information retrieval unit configured to retrieve information of the radio base station apparatus or information of a device that is connected to the radio base station apparatus; a timer value determination unit configured to determine, based on the retrieved information, a timer value representing a time period from termination of data communication with a mobile station until causing the mobile station to transition to an idle state; and an idle transition controller configured to cause the mobile station to transition to the idle state, based on the determined timer value.

Further, a transition control method according to the present invention is a transition control method of a radio base station apparatus for causing a mobile station to transition to an idle state. The transition control method includes a step of retrieving information of the radio base station apparatus or information of a device that is connected to the radio base station apparatus; a step of determining, based on the retrieved information, a timer value representing a time period from termination of data communication with the mobile station until causing the mobile station to transition to the idle state; and a step of causing the mobile station to transition to the idle state, based on the determined timer value.

### EFFECT OF THE PRESENT INVENTION

According to the present invention, idle transition timer values can individually be set for mobile stations.

### BRIEF DESCRIPTION OF THE DRAWINGS

FIG. 1 is a configuration diagram of a communication system according to an embodiment of the present invention;
FIG. 2 is a diagram showing state transition of a mobile station;
FIG. 3 is a diagram showing an example of information stored in a UE information DB;
FIG. 4 is a sequence diagram of a transition control method according to an embodiment of the present invention;
FIG. 5 is a flowchart (version 1) of a timer value determination method according to the embodiment of the present invention;
FIG. 6 is a flowchart (version 2) of the timer value determination method according to the embodiment of the present invention;
FIG. 7 is a flowchart (version 3) of the timer value determination method according to the embodiment of the present invention; and
FIG. 8 is a flowchart (version 4) of the timer value determination method according to the embodiment of the present invention.

### EMBODIMENTS FOR CARRYING OUT THE INVENTION

In an embodiment of the present invention, a transition control method is explained such that a radio base station apparatus (eNB) causes a mobile station (UE) to transition to an idle state.

The eNB retrieves information of the eNB itself or a device that is connected to the eNB, such as a mobile station or an EPC. The eNB obtains, for example, whether a mobile station includes a discontinuous reception (DRX) function, moving speed of a mobile station, a type of a mobile station, a load on the eNB, or a load on an EPC. The eNB determines, based on the retrieved information, a timer value representing a time period from termination of data communication with the mobile station until causing the mobile station to transition to the idle state. This timer value is referred to as an "idle transition timer value." When a non-communication time period exceeds the idle transition timer value, the eNB causes the mobile station to transition to the idle state.

Hereinafter, the embodiment of the present invention is explained in detail by using the figures.

### <Configuration of a communication system>

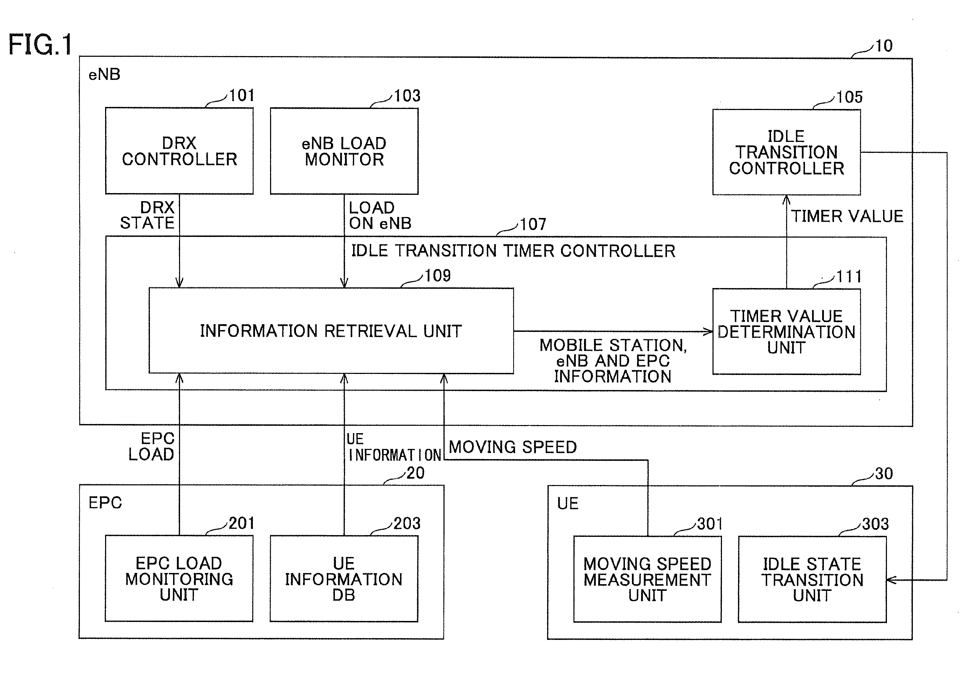

FIG. 1 is a configuration diagram of a communication system according to the embodiment of the present invention. The communication system includes a radio base station (eNB) 10, a core network apparatus (EPC) 20, and a mobile station (UE) 30. Typically, the communication system may include a plurality of eNBs 10, a plurality of EPCs 20, and a plurality of UEs 30.

The eNB 10 transmits a downlink radio signal to and receives an uplink radio signal from the UE 30 being served in a cell through a radio link. In this embodiment, the eNB 10 performs data communication with the UE 30. When no communication is performed for a predetermined time period from termination of the data communication with the UE 30, the eNB 10 causes the UE 30 to transition to an idle state. The time period from termination of the data communication with the UE 30 until causing the UE 30 to transition to the idle state is referred to as an "idle transition timer value." Here, when no communication is performed for a predetermined time period from termination of the data communication, the UE 30 may transition to a DRX state prior to transition to the idle state. A time period from termination of the data communication until transition to the DRX state is referred to as a "DRX transition timer value."

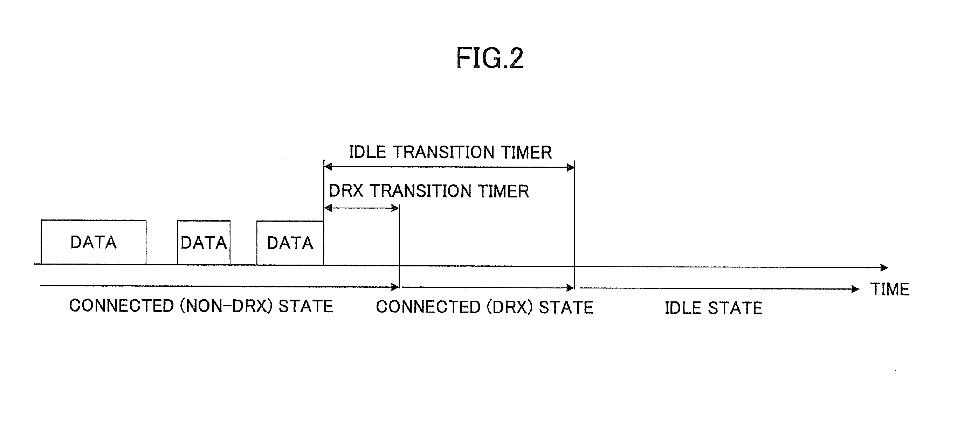

FIG. 2 shows state transition of a mobile station. The UE 30 performs data communication with the eNB 10 in an RRC Connected state. When a non-communication time period exceeds the DRX transition timer value, the UE 30 including a DRX function may transition to the DRX state in which reception is performed only during predetermined time intervals. In the DRX state, power consumption of the mobile station is reduced by periodically performing reception only in a predetermined time interval, and not performing reception in a time interval other than the predetermined time interval.

When the non-communication time period exceeds the idle transition timer value, the UE 30 transitions to the idle transition state by a command from the eNB 10. In the idle state, the mobile station operates with the lowest power consumption.

When the UE 30 has the DRX function, in general, the UE 30 transitions to the DRX state after termination of data communication, and subsequently the UE 30 transitions to the idle state.

The EPC 20 is connected to a plurality of eNBs 10. The EPC 20 manages information of UE 30, and forwards data between access networks.

The UE 30 is a device for performing radio communication with the eNB 10. For convenience of explanation, a mobile station is used. However, it can be a fixed terminal. In general, any user equipment that is capable of performing radio communication with the eNB 10 can be used. User equipment can be a mobile phone, a smart phone, an information terminal, a mobile personal computer, and so forth. However, the user equipment is not limited to these. The UE 30 may include a DRX function. The UE 30 may not include the DRX function. The UE 30 including the DRX function may operate in power saving states, such as the DRX state and the idle state. The UE 30 not including the DRX function may operate a power saving state, such as the idle state.

The eNB 10 includes a DRX controller 101, an eNB load monitor 103, an idle transition controller 105, and an idle transition timer controller 107.

The DRX controller 101 manages the DRX state of the UE 30. The DRX controller 101 manages whether the UE 30 includes the DRX function, and whether the UE 30 is in the DRX state.

The eNB load monitor 103 monitors a load of the eNB 10 itself. For example, the eNB load monitor 103 may monitor indices, such as a resource utilization rate of the eNB 10 (e.g., a CPU utilization rate), a simultaneously connected mobile station number (the number of simultaneously connected mobile stations), and an amount of data traffic.

The idle transition controller 105 manages the idle state of the UE 30. When a time period of non-communication with the UE 30 exceeds the idle transition timer value, the idle transition controller 105 causes the UE 30 to transition to the idle state. As described below, the idle transition timer value can be determined by the idle transition timer controller 107.

The idle transition timer controller 107 includes an information retrieval unit 109 and a timer value determination unit 111.

The information retrieval unit 109 may retrieve information on the eNB 10 itself or information on a device connected to the eNB 10, such as the UE 30, the eNB 10, or the EPC 20. For example, the information retrieval unit 109 may retrieve, from the DRX controller 101, information on a mobile station function that is information as to whether the UE 30 includes the DRX function. For example, the information retrieval unit 109 may retrieve information on a moving speed of UE 30 from the UE 30 (a moving speed measurement unit 301). Here, the information retrieval unit 109 may retrieve the moving speed that is estimated in the eNB 10. For example, the information retrieval unit 109 may retrieve UE information, such as mobile station classification, from the EPC 20 (UE information DB 203). For example, the information retrieval unit 109 may retrieve information on a load on the eNB 10 from the eNB load monitor 103. For example, the information retrieval unit 109 may retrieve information on a load on the EPC 20 from the EPC 20 (an EPC load monitoring unit 201). Here, in order to determined a time zone in which the load is heavy, information on a load may be retrieved while the information on the load is associated with the time.

The timer value determination unit 111 may determine an idle transition timer value for the UE 30, based on the information retrieved by the information retrieval unit 109.

For example, the timer value determination unit 111 may determine a timer value in accordance with information on a mobile station function, such as information as to whether the DRX function is included. Specifically, when the UE 30 does not include the DRX function, the timer value determination unit 111 may set a timer value that is less than that of the case in which the DRX function is included because the effect of reducing power consumption by the DRX function may not be expected. Additionally, even if the UE 30 includes the DRX function, when the UE 30 is moving at high speed, it can be expected that the effect of the DRX is not fully exhibited. In such a case, even if the UE 30 includes the DRX function, the timer value determination unit 111 may set a timer value that is less than that of the case in which the UE 30 is moving at low speed.

For example, the timer value determination unit 111 may determine the timer value based on the classification of the UE 30. Specifically, the timer value determination unit 111 may set different timer values, depending on the classification of the UE 30. Additionally, the timer value determination unit 111 may determine the timer value by using an actual value that may differ depending on the classification of the mobile station, such as power consumption during the DRX state of the UE 30, the power consumption during the idle state of the UE 30, or a transition time period from the idle state to the communication state of the UE 30. For example, when a difference between the power consumption during the DRX state and the power consumption during the idle state is less than a threshold value, the timer value determination unit 111 may set the timer value to be greater than usual.

For example, the timer value determination unit 111 may determine a timer value based on the loads on both the eNB 10 and the EPC 20 or the load on one of the eNB 10 and the EPC 20. Specifically, a timer value that is greater than usual may be set for an area and a time zone such that the load on the eNB 10 or the load on the EPC 20 is greater. Here, if the maximum value of the load on the eNB 10 is greater than a predetermined value, a cell that is covered by the eNB 10 can be considered to be a congestion target cell. In the congestion target cell, the eNB 10 may set a timer value that is greater than usual for the time zone in which the load on the eNB 10 or the load on the EPC 20 becomes greater. Here, the timer value determination unit 111 may only consider the area. Alternatively, the timer value determination unit 111 may only consider the time zone. Further, the timer value determination unit 111 may set a small timer value in real time by using the load measured at desired time, within a range in which a state does not become an overloaded state such that the load exceeds the threshold value.

The EPC 20 includes an EPC load monitoring unit 201 and a UE information DB 203.

The EPC load monitoring unit 201 may monitor a load on the EPC 20. For example, the EPC load monitoring unit 201 may monitor indices such as a resource utilization rate (a CPU utilization rate) of the EPC 20, a simultaneously connected mobile station number (the number of simultaneously connected mobile stations) of the EPC 20, or an amount of data traffic of the EPC 20.

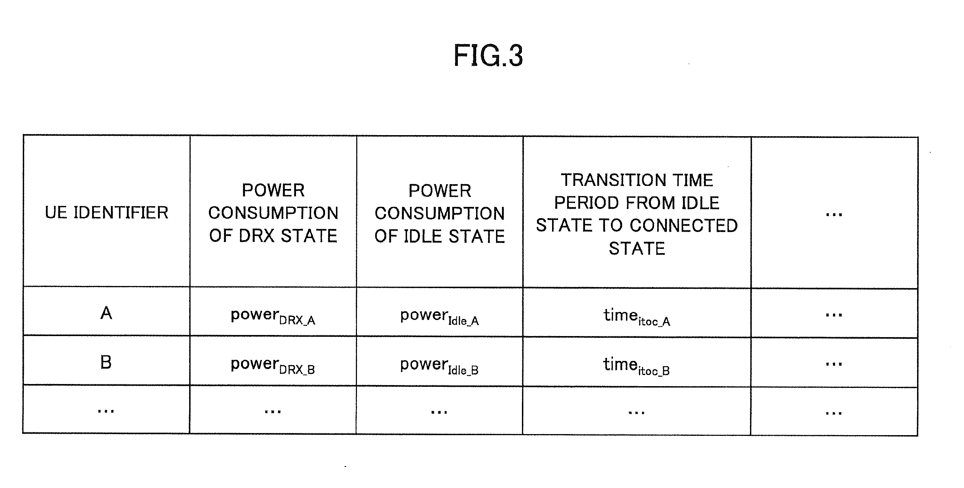

The UE information DB 203 manages information of the UE 30. For example, as shown in FIG. 3, the UE information DB 203 may store an actual value that can differ depending on mobile station classification, such as power consumption during a DRX state, power consumption during an idle state, or a transition time period from an idle state to a communication state. Here, the UE information DB 203 may store actual values while associating the actual values with identifiers of the corresponding UEs. Additionally, battery capacity of the UE 30 may be stored. Furthermore, the UE information DB 203 may store the mobile station classification itself, while associating the mobile station classification with the identifiers of the corresponding UEs.

The UE 30 includes the moving speed measurement unit 301 and an idle transition unit 303.

The moving speed measurement unit 301 may measure the moving speed of the UE 30. For example, the moving speed measurement unit 301 may measure a position of the UE by the Global Positioning System (GPS). The moving speed measurement unit 301 may measure the moving speed of the UE 30 by a moving distance per a unit time.

The idle transition unit 303 causes a state of the UE 30 to transition to the idle state in response to a command from the eNB 10.

### <Operation of the communication system>

Hereinafter, operation of the communication system according to the embodiment of the present invention is explained.

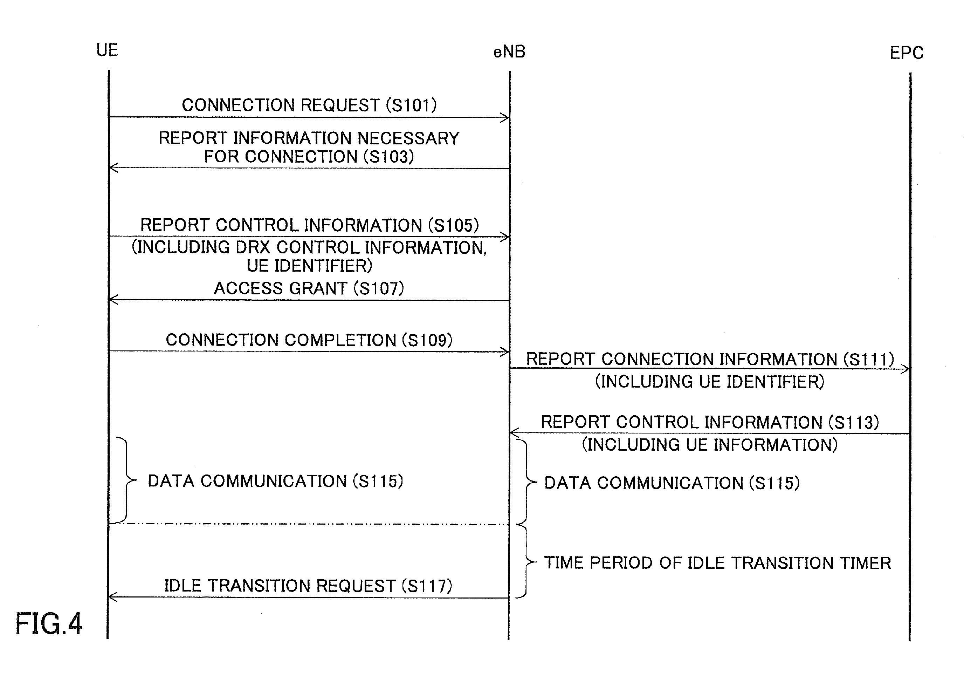

FIG. 4 is a sequence diagram of the transition control method according to the embodiment of the present invention. During start of communication by a mobile station, the mobile station transmits a connection request to the eNB (S101). The eNB that receives the connection request transmits necessary information, such as synchronization timing, to the mobile station (S103). Next, the mobile station transmits control information, such as the presence or absence of its own DRX function or the identifier of the UE, to the eNB (S105). The eNB that receives the control information transmits an access grant signal to the mobile station (S107). After completing the connection process, the mobile station transmits a connection completion signal to the eNB (S109). The state of the mobile station becomes the RRC Connected state by completing the connection.

Subsequently, the eNB transmits information on the connected mobile station, such as the identifier of the UE, to the EPC (S111). The EPC that receives a report on the connection information retrieves the UE information from the UE identifier, and transmits control information including the UE information to the eNB (S113). The eNB that receives the report on the control information starts data communication with the mobile station (S115).

Upon completion of the data communication, eNB measures a non-communication time period by using the idle transition timer value that is calculated by the idle transition timer controller 107. When the non-communication time period exceeds the timer value, the eNB transmits an idle transition request to the mobile station (S117). Here, the mobile station may automatically transition to the DRX, after completion of the data communication. The mobile station that receives the idle transition request transitions to the idle state.

Next, there is explained a specific timer value determination method by the idle transition timer controller 107.

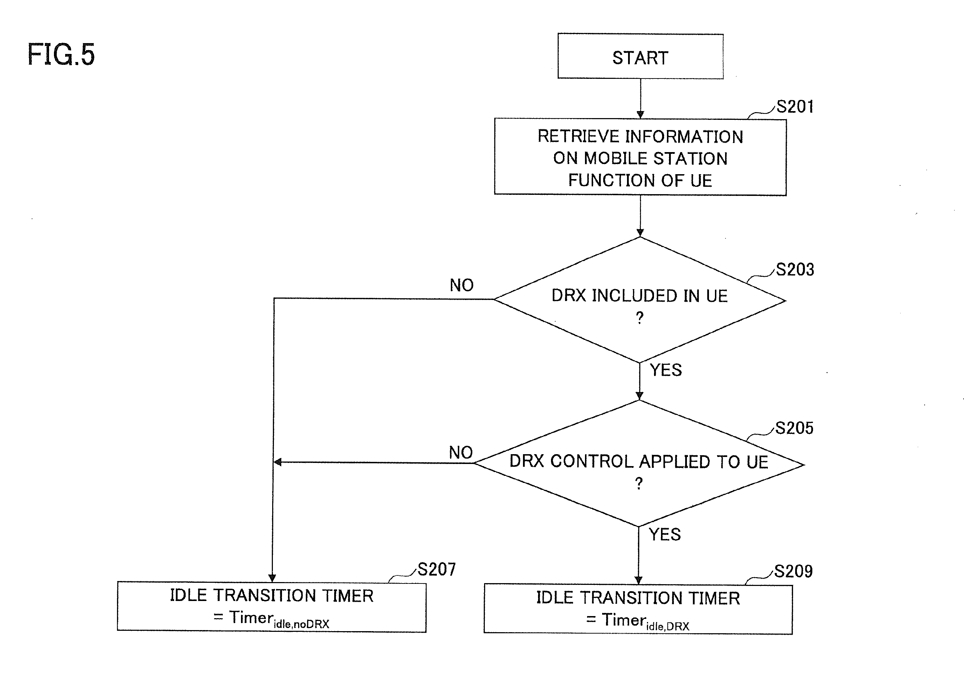

FIG. 5 is a flowchart of a timer value determination method according to the embodiment of the present invention (version 1). FIG. 5 shows a method of determining the timer value based on the presence or absence of the DRX function, which is transmitted by the mobile station.

The idle transition timer controller 107 retrieves information on a mobile station function, such as the presence or absence of the DRX function, from the mobile station (S201). When the mobile station does not include the DRX function (S203: NO), the idle transition timer controller 107 sets a timer vale Timer_{idle}, _{noDRX}, which is a timer value for not applying the DRX control (S207). Additionally, even if the DRX function is included (S203: YES), when it is expected that the DRX effect may not be fully exhibited (S205: NO) due to high-speed movement of the mobile station, for example, the idle transition timer controller 107 sets the timer value Timer_{idle}, _{noDRX}, which is a timer value for not applying the DRX control (S207). When the mobile station includes the DRX function (S203: YES), and when the DRX function is to be applied (S205: YES), the idle transition timer controller 107 sets a timer value Timer_{idle}, _{DRX}, which is a timer value for applying the DRX control (S209). The relationship between the Timer_{idle}, _{noDRX} and the Timer_{idle}, _{DRX} is such that Timer_{idle}, _{noDRX} < Timer_{idle}, _{DRX}. Namely, when the DRX is not applied, the power saving effect of the DRX may not be expected. In such a case, the timer value may be set to be a lesser value relative to that of during application of the DRX.

In FIG. 5 both the presence or absence of the DRX function and the moving speed are considered. However, only one of them may be considered. Additionally, in FIG. 5, the same timer value Timer_{idle}, _{noDRX} is applied for the case in which the DRX function is not included and for the case in which the DRX function is included but the DRX is not applied. However, different timer values may be used.

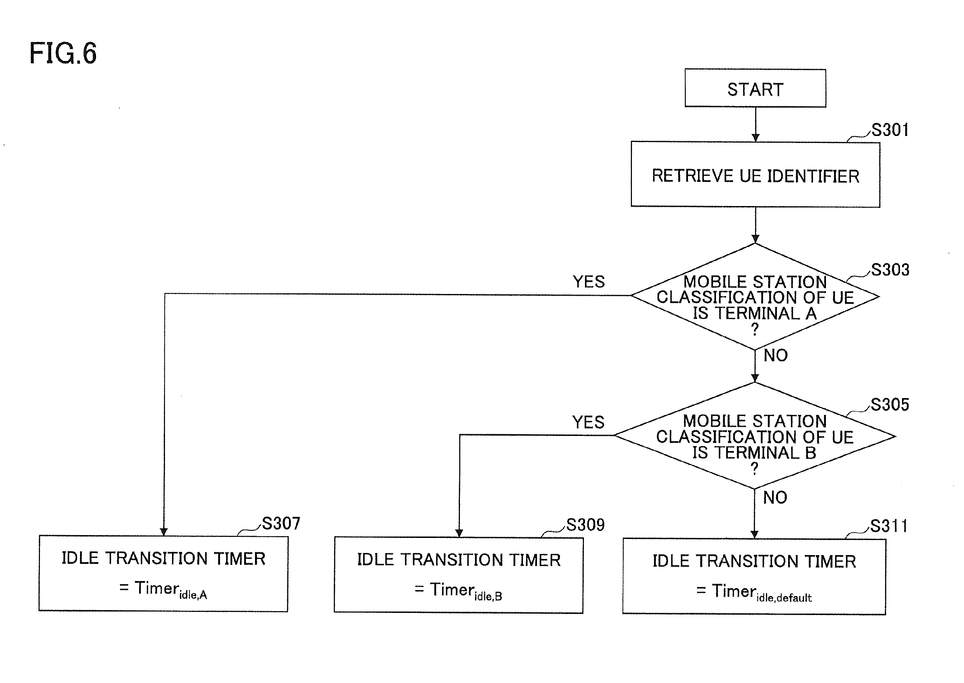

FIG. 6 is a flowchart of a timer value determination method according to the embodiment of the present invention (version 2). FIG. 6 shows a case in which a timer value is set for each of terminals by using the UE identifier that is reported from the mobile station.

The idle transition timer controller 107 may directly retrieve the UE identifier from the mobile station, or may retrieve the UE identifier from the EPC (S301). The idle transition timer controller 107 retrieves the mobile station information from the EPC by sending the UE identifier to the EPC. The idle transition timer controller 107 determines the idle transition timer value by considering an actual value of the mobile station (such as power consumption during the DRX state, power consumption during the idle state, or the transition time period from the idle state to the communication state) from the retrieved mobile station information. For example, when the mobile station classification of the UE is A (S303: YES), the idle transition timer controller 107 sets a time value Timer_{idle}, _{A} (S307). For example, when the mobile station classification of the UE is B (S305: YES), the idle transition timer controller 107 sets a timer value Timer_{idle}, _{B} (S309). For the other cases (S305: NO), the idle transition timer controller 107 sets a timer value Timer_{idle}, default (S309).

For example, for a case of a mobile station for which the power consumption during the DRX state is almost the same as that of during the idle state, by setting the timer value to be a greater value than a general value so as to reduce the load on the eNB or the EPC, the load on the network can be reduced without significantly increasing the power consumption of the mobile station.

In FIG. 6, two types of mobile station classification are considered. However, one type or more than two types of mobile station classification may be considered.

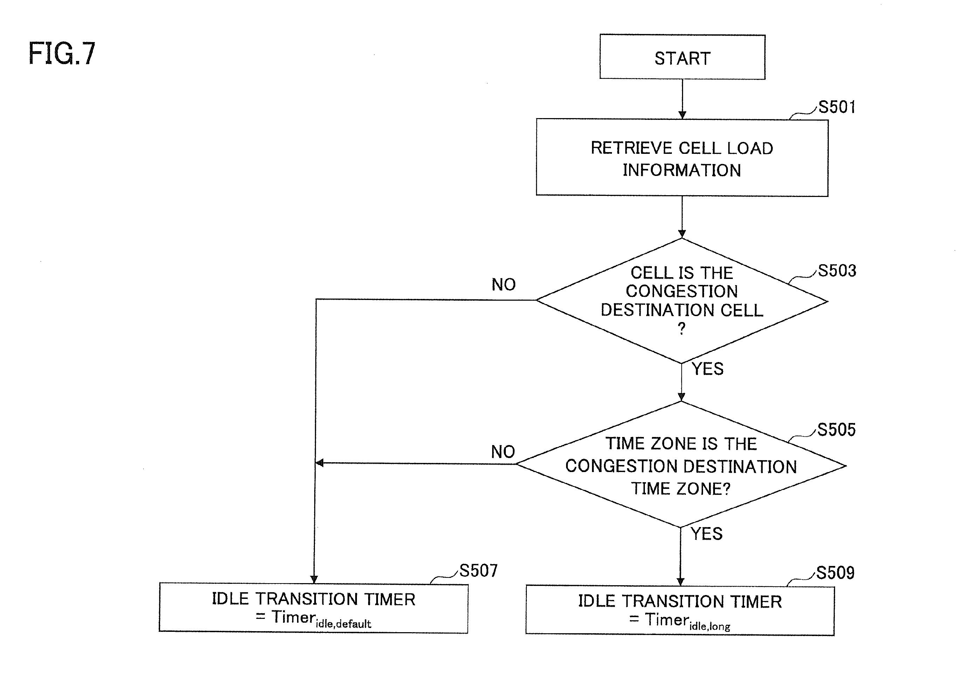

FIG. 7 is a flowchart of a timer value determination method according to the present invention (version 3). FIG. 7 shows a case in which a greater timer value is to be set for an area or a time zone such that the load on the eNB or the load on the EPC becomes greater.

The idle transition timer controller 107 retrieves the load on the eNB (S501). When the maximum value of the load of the eNB is greater than a predetermined value, a cell that is covered by the eNB 10 may be considered to be a congestion target cell. When the cell is not the congestion target cell (S503: NO), the idle transition timer controller 107 sets a timer value Timer_{idle}, default (S507). Even if the cell is the congestion target cell (S503: YES), for the time zone during which the load on the eNB 10 or the load on the EPC 20 is not heavy (S505: NO), the idle transition timer controller 107 sets a timer value Timer_{idle}, default (S507). When the cell is the congestion target cell (S503: YES), the idle transition timer controller 107 sets a timer value Timer_{idle}, _{long} (S509) ,which is greater than usual, for the time zone during which the load on the eNB or the load on the EPC is heavy (S505: YES).

In this manner, since the area or the time zone can be statistically recognized in which the load becomes heavy, the load on the eNB or the EPC can be reduced by setting a greater timer value to the area or the time zone. For example, it is expected that, in the evening, a connected mobile station number (the number of connected mobile stations) and the load on the network increase at a major railway station due to the rush hours. Accordingly, a greater timer value may be set.

In FIG. 7, the area and the time zone are considered. However, only one of the area and the time zone may be considered. Additionally, finer timer values (Timer_{idle}, _{long 1}, Timer_{idle}, long ₂, Timer_{idle}, _{long 3}, ...) may be set, depending on the time zones.

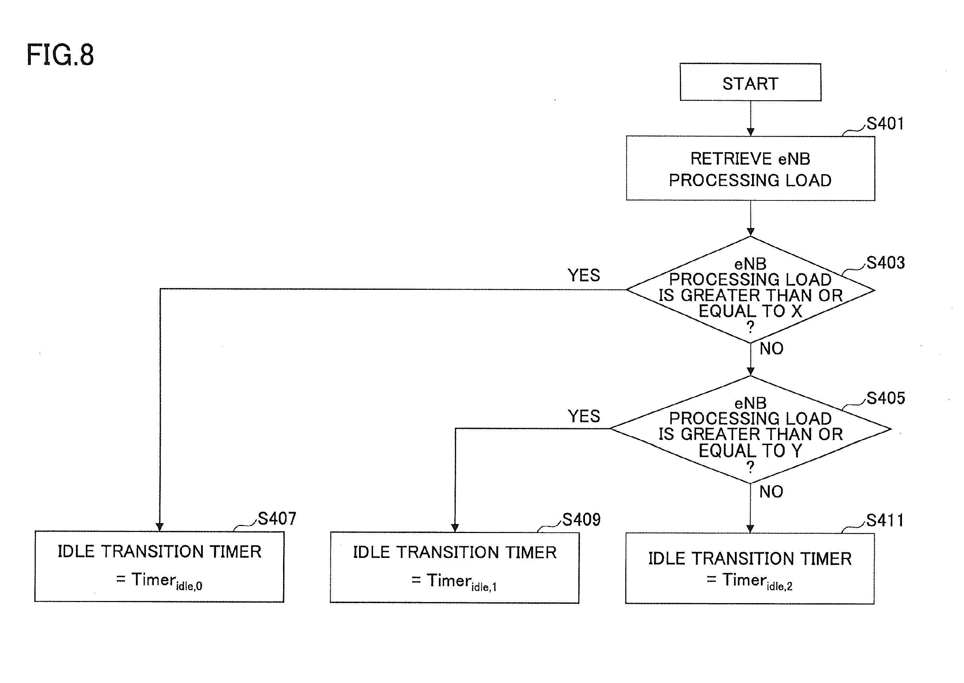

FIG. 8 is a flowchart of a timer value determination method according to the present invention (version 4). FIG. 8 shows a case in which a timer value is set by using a result of measuring the load on the eNB at a desired time.

The idle transition timer controller 107 retrieves the load on the eNB (S401). When the load on the eNB is greater than or equal to a threshold value X (S403: YES), the idle transition timer controller 107 sets the timer value Timer_{idle}, ₀ (S407). Additionally, when the load on the eNB is less than the threshold value X (S403: NO), and when the load on the eNB is greater than or equal to a threshold value Y (S405: YES), the idle transition timer controller 107 sets a timer value Timer_{idle}, ₁ (S409). When the load on the eNB is less than the threshold value Y (S405: NO), the idle transition timer controller 107 sets a timer value Timer_{idle}, ₂ (S411).

A case in which a timer value is set by using a result of measuring a load on the EPC at a desired time may be achieved by a similar procedure. Here, both the load on the eNB and the load on the EPC may be used, or only one of them may be used. In this manner, by monitoring the load at a desired time, a short timer value can be set within a range in which overloading can be avoided. Indices of the load may be the CPU utilization rate, the simultaneously connected mobile station number (the number of simultaneously connected mobile stations), or the amount of data traffic, for example. Additionally, in FIG. 6, comparisons are made for the corresponding two types of threshold values. However, a comparison may be made for only one type of threshold value. Alternatively, comparisons may be made for three or more types of threshold values.

The timer value determination methods of FIG. 5 to FIG. 8 may be combined and used. For example, among a plurality of UEs including the DRX function, different timer values may be determined depending on the mobile station classification. Additionally, for example, in a particular area, timer values may be individually set by using reporting information indicating the presence or absence of the DRX function during the time zone in which the load on the eNB is light, and a large timer value may be uniformly set for all the terminals during the time zone in which the load on the eNB is heavy. Further, when a mobile station moves to a coverage area of another eNB, the UE information or the information on the load on the EPC retrieved by the previous eNB may be transferred to the successive eNB.

### <Effect of the embodiment>

According to the embodiment of the present invention, an idle transition timer value may be adjusted depending on a state of a mobile station, a state of an eNB, or a state of an EPC, for example.

Duration of a battery of a mobile phone may significantly affect convenience of a user. According to the embodiment of the present invention, an idle transition timer value can be adjusted, depending on a mobile station that is used by a user or on a usage environment, and thereby the duration of the battery of the mobile phone can be increased.

Especially, by determining the idle transition timer value depending on the presence or absence of the DRX function, duration of a battery of a mobile station that does not include the DRX function can be increased.

Additionally, by determining an idle transition timer value depending on mobile station classification, a load on a network can be reduced.

Further, by considering a load on a network, when the load on the network is not heavy, an effect of increasing duration of a battery of a mobile station can be prioritized.

For convenience of explanation, devices according to the embodiment of the present invention are explained by using functional block diagrams. However, devices of the present invention may be implemented in hardware, software or a combination thereof. Additionally, functional units may be combined and used depending on necessity.

For convenience of explanation, the methods according to the embodiment of the present invention are explained by the flowcharts indicating the flows of the processes. However, the methods of the present invention may be implemented in an order that is different from the order indicated in the embodiment.

The embodiment of the present invention is explained above. However, the present invention is not limited to the above-explained embodiment, and various modifications and applications can be made within the scope of the claims.

The present international application is based on and claims the benefit of priority of Japanese Patent Application No. 2012-002837, filed on January 11, 2012, the entire contents of Japanese Patent Application No. 2012-002837 are hereby incorporated by reference.

### LIST OF REFERENCE SYMBOLS

10: Radio base station (eNB)
101: DRX controller
103: eNB load monitor
105: Idle transition controller
107: Idle transition timer controller
109: Information retrieval unit
111: Timer value determination unit
20: Core network apparatus (EPC)
201: EPC load monitoring unit
203: UE information DB
30: Mobile station (UE)
301: Moving speed measurement unit
303: Idle transition unit

## Claims

1. A radio base station apparatus comprising:
an information retrieval unit configured to retrieve information of the radio base station apparatus or information of a device that is connected to the radio base station apparatus;
a timer value determination unit configured to determine, based on the retrieved information, a timer value representing a time period from termination of data communication with a mobile station until causing the mobile station to transition to an idle state; and
an idle transition controller configured to cause the mobile station to transition to the idle state, based on the determined timer value.

2. The radio base station apparatus according to claim 1,
wherein the information retrieval unit is configured to retrieve information on a mobile station function of the mobile station, and
wherein the timer value determination unit is configured to determine the timer value, based on the retrieved information on the mobile station function.

3. The radio base station apparatus according to claim 2,
wherein, when the retrieved information on the mobile station function indicates that a discontinuous reception function is included, the timer value determination unit is configured to set a first timer value, and
wherein, when the retrieved information on the mobile station function indicates that the discontinuous reception function is not included, the timer value determination unit is configured to set a second timer value that is less than the first timer value.

4. The radio base station apparatus according to claim 2,
wherein the information retrieval unit is configured to retrieve a moving speed of the mobile station,
wherein, when the retrieved information on the mobile station function indicates that the discontinuous reception function is included, and when the retrieved moving speed is less than a predetermined speed, the timer value determination unit is configured to set the first timer value, and
wherein, when the retrieved information on the mobile station function indicates that the discontinuous reception function is included, and when the retrieved moving speed is greater than the predetermined speed, the timer value determination unit is configured to set a second timer value less than the first timer value.

5. The radio base station apparatus according to claim 1,
wherein the information retrieval unit is configured to retrieve mobile station classification of the mobile station, and
wherein the timer value determination unit is configured to determine the timer value, based on the retrieved mobile station classification.

6. The radio base station apparatus according to claim 1,
wherein the information retrieval unit is configured to retrieve a load on the radio base station apparatus or a load on a core network apparatus, and
wherein the timer value determination unit is configured to determine the timer value, based on the retrieved load.

7. The radio base station apparatus according to claim 6,
wherein the information retrieval unit is configured to retrieve the load on the radio base station apparatus, and configured to associate the load with time,
wherein, when a maximum value of the load on the radio base station apparatus is greater than a first predetermined value, the timer value determination unit is configured to set a first timer value on a time zone in which the load on the radio base station apparatus or the load on the core network apparatus is greater than a second predetermined value, and
wherein the timer value determination unit is configured to set a second timer value that is less than the first timer value on a time zone in which the load on the radio base station apparatus or the load on the core network apparatus is less than the second predetermined value.

8. The radio base station apparatus according to claim 6,
wherein the load is a resource utilization rate, a simultaneously connected mobile station number, or an amount of traffic.

9. A transition control method of a radio base station apparatus for causing a mobile station to transition to an idle state, the method comprising:
a step of retrieving information of the radio base station apparatus or information of a device that is connected to the radio base station apparatus;
a step of determining, based on the retrieved information, a timer value representing a time period from termination of data communication with the mobile station until causing the mobile station to transition to the idle state; and
a step of causing the mobile station to transition to the idle state, based on the determined timer value.
